(19) Europäisches Patentamt
European Patent Office
Office européen des brevets

(11) Veröffentlichungsnummer: **0 057 665**
**B1**

# (12) EUROPÄISCHE PATENTSCHRIFT

(45) Veröffentlichungstag der Patentschrift: **29.05.85**

(51) Int. Cl.[4]: **C 09 B 15/00,** C 07 D 219/08

(21) Anmeldenummer: **82810029.7**

(22) Anmeldetag: **25.01.82**

(54) **Verfahren zur Herstellung von 1-Acylamino-3,4-phthaloyl-acridonen.**

(30) Priorität: **30.01.81 CH 617/81**

(43) Veröffentlichungstag der Anmeldung: **11.08.82 Patentblatt 82/32**

(45) Bekanntmachung des Hinweises auf die Patenterteilung: **29.05.85 Patentblatt 85/22**

(84) Benannte Vertragsstaaten: **CH DE FR GB IT LI**

(56) Entgegenhaltungen: **Keine**

(73) Patentinhaber: **CIBA-GEIGY AG, Postfach, CH-4002 Basel (CH)**

(72) Erfinder: **Grélat, Maurice, Dr., Habermarkweg 41, CH-4126 Bettingen (CH)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein vorteilhaftes neues Verfahren zur Herstellung von 1-Acylamino-3,4-phthaloylacridonen durch hydrierende Ringschlußreaktion von 1-Acylamino-4-anilidoanthrachinon-2'-carbonsäureestern und die Herstellung dieser Ester.

Die erfindungsgemäße Ringschlußreaktion zum Acridonring erfolgt unter milden Bedingungen bezüglich Temperatur und Alkalität des Reaktionsmediums nach folgendem Reaktionsschema:

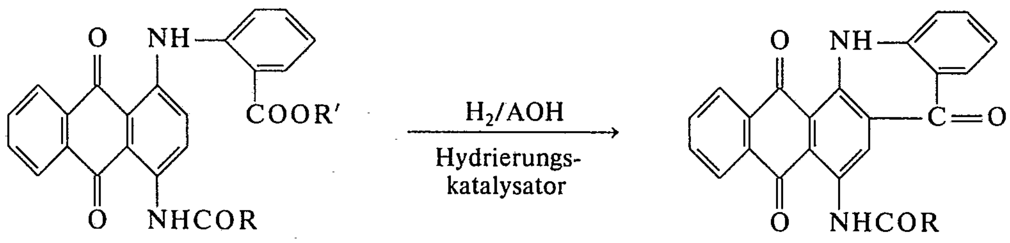


wobei A Alkalimetall, R' $C_1-C_4$-Alkyl und R Phenyl, Alkylphenyl oder $C_1-C_8$-Alkyl bedeuten.

Die bisher bekannten Verfahren, z. B. DE-PS 246 966, beschreiben den Ringschluß mittels Zinkstaub bzw. Hydrosulfit als Reduktionsmittel und stark basischem Reaktionsmedium. GB-PS 421 591 beansprucht zur Esterherstellung daneben noch eine verhältnismäßig hohe Reaktionstemperatur von 150 bis 250° C. Unter diesen Bedingungen tritt jedoch teilweise Verseifung des Esters ein und die entstehende Carbonsäure ergibt keinen Ringschluß, so daß die Ausbeute an Acridon nur bei etwa 65 bis 75% der theoretischen Menge liegt.

In Houben-Weyl, Methoden der Organischen Chemie, Col 7/3 c (1979), S. 276, Pkt. 2, wird desweiteren beschrieben, daß man schon bei Verwendung von nicht sehr aktiven Nickel-Katalysatoren Anthrachinone zu Anthronen reduzieren kann.

Es war daher zu erwarten, daß mit aktiven Hydrierungskatalysatoren, wie z. B. Raney-Nickel, 1-Acylamino-4-anilidoanthrachinon-2'-carbonsäureester in die entsprechenden Anthrone oder sogar noch weiter reduzierte Produkte überführt werden würden.

Aufgabe der vorliegenden Erfindung war es, eine verbesserte Synthese von 1-Acylamino-3,4-phthaloylacridonen zu entwickeln.

Diese Aufgabe wird durch das erfindungsgemäße Verfahren gelöst. Es wurde gefunden, daß sich überraschenderweise die sehr aktiven Nickel- und Palladium-Katalysatoren für die hydrierende Ringschlußreaktion besonders gut eignen, und daß keine Anthrone entstehen, so daß die Ausbeute an Acridonen bei 90% und darüber liegt.

Einen weiteren Vorteil des erfindungsgemäßen Verfahrens stellt die Veresterung mit Alkylphosphorsäuredialkylestern dar. Diese Veresterungsmethode spart eine Reaktionsstufe ein. Normalerweise muß die Carbonsäuregruppe erst ins Säurechlorid umgewandelt werden, z. B. mittels Phosphorpentachlorid oder Thionylchlorid, und anschließend mittels Alkalialkoholaten in den Ester überführt werden.

Gegenstand der Erfindung ist somit ein neues Verfahren zur Herstellung von 1-Acylamino-3,4-phthaloylacridonen durch Umsetzung von 1-Acylamino-4-bromanthrachinon mit Anthranilsäure zu 1-Acylamino-4-anilidoanthrachinon-2'-carbonsäure, Veresterung der Säure und anschließende reduktive Ringschlußreaktion, dadurch gekennzeichnet, daß man die Veresterung mittels Alkylphosphorsäuredialkylestern durchführt, wobei die Alkylgruppen je 1 bis 4 C-Atome aufweisen, und die reduktive Ringschlußreaktion von 1-Acylamino-4-anilido-2'-carbonsäureester der Formel

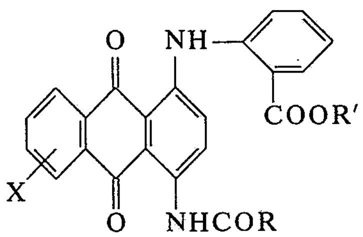

zum 1-Acylamino-3,4-phthaloylacridon der Formel

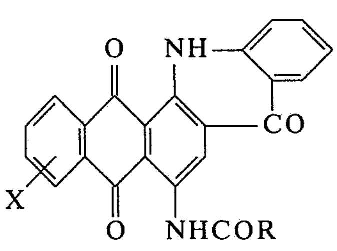

wobei R Phenyl, Alkylphenyl, $C_1-C_8$-Alkyl, R' $C_1-C_4$-Alkyl und X Wasserstoff, Halogen oder $C_1-C_4$-Alkyl bedeuten, mittels eines Hydrierungskatalysators und Wasserstoff im basischen Reaktionsmedium vollzieht.

R bedeutet gemäß vorliegender Erfindung z. B. Äthyl, Propyl, Isoamyl, insbesondere aber Phenyl oder Methyl, X bedeutet Halogen, wie Chlor oder Brom, Alkyl, wie Methyl oder Äthyl, insbesondere ist X jedoch Wasserstoff.

Als Hydrierungskatalysatoren werden die üblichen Substanzen, wie z. B. Platin-Kohle, vor allem aber Raney-Nickel und Palladium auf Kohle verwendet.

Die Gesamtreaktion kann in zwei Stufen aufgeteilt werden, wobei die erste Stufe die Herstellung des 1-Acylamino-4-anilidoanthrachinon-2'-carbonsäureesters, die zweite Stufe die Ringschlußreaktion zum Acridon umfaßt.

Bei Verwendung von polaren Lösungsmitteln, wie z. B. Nitrobenzol oder aliphatischen Alkoholen, als Reaktionsmedium können die Einzelschritte zur Herstellung des genannten Esters als sogenannte Eintopfreaktion durchgeführt werden, d. h. die Zwischenstufen der Reaktion werden nicht speziell isoliert, sondern es wird im gleichen Reaktionsmedium weitergearbeitet.

Besonderes Merkmal der zweiten Stufe der Gesamtreaktion, des reduktiven Acridonringschlusses, ist neben der Verwendung von aktiven Katalysatoren mit großer Oberfläche die Anwendung einer nicht zu großen Alkalimenge. Vorzugsweise verwendet man 2 bis 4 Mol Alkali, insbesondere 2,2 bis 3 Mol Alkali pro Mol Anthrachinonverbindung. Als Alkaliverbindung verwendet man z. B. Ammoniak, LiOH, insbesondere jedoch KOH oder vor allem NaOH.

Vorteilhaft ist in dieser Stufe ebenfalls der Einsatz von Puffern üblicher Art, wie z. B. Natriumacetat, vorzugsweise in einer Menge von 1 bis 10 Gewichtsprozent, bezogen auf den Ester, und von Lösungsvermittlern bzw. Oberflächenaktivierern. Solche sind im konkreten Fall z. B. niedere Alkohole und Ätheralkohole, sowie vor allem Pyridin und Pyridinderivate. Sie werden vorzugsweise in einer Menge von 30 bis 100 Gewichtsprozent, bezogen auf den Ester, eingesetzt und bewirken eine Verkürzung der Reaktionszeit. Die Reaktionstemperaturen betragen bei der Veresterung 100 bis 150°C, in der Ringschlußstufe wird vorteilhaft etwa bei Raumtemperatur gearbeitet, wobei der adiabatische Temperaturanstieg nicht so stark ist, daß speziell gekühlt werden muß, demzufolge ist eine Reaktionstemperatur von 10 bis 50° C, insbesondere 18 bis 25° C, bevorzugt.

Die Reaktanden werden in stöchiometrischen Verhältnissen bzw. in nur geringen Abweichungen davon in die Reaktion eingesetzt. Lediglich der Alkylphosphorsäuredialkylester wird im Überschuß der zur Veresterung der Carbonsäuregruppen notwendigen Menge verwendet, vorzugsweise setzt man das 2- bis 5fache der theoretisch erforderlichen Menge ein.

Falls erwünscht, kann aus dem hergestellten 1-Acylamino-3,4-phthaloylacridon durch Verseifung, z. B. mittels ca. 90%iger Schwefelsäure, 1-Amino-3,4-phthaloylacridon erhalten werden.

Die gemäß dem neuen Verfahren erhaltenen Verbindungen sind Küpenfarbstoffe oder Farbstoffzwischenprodukte zur Herstellung von Küpenfarbstoffen.

Beispielsweise kann das neue Verfahren folgendermaßen ablaufen: 1-Acylamino-4-bromanthrachinon, Anthranilsäure, Alkalimetallhydroxid und Kupfer(1)chlorid als Kondensationskatalysator werden in einer solchen Menge eines polaren Lösungsmittels mit einem Siedepunkt oberhalb 130°C, wie z. B. Nitrobenzol oder Amylalkohol, vorgelegt, daß der Ansatz gut rührbar ist. In der Regel ist es etwa die doppelte Gewichtsmenge, bezogen auf die Gesamtmenge der Reaktionskomponenten.

Daraufhin wird ca. 2 bis 5 Stunden auf 100 bis 130° C erhitzt, wobei sich bildendes Wasser fortwährend abdestilliert wird.

Danach erhitzt man während 3 bis 8 Stunden auf 120 bis 150° C, läßt den Alkylphosporsäuredialkylester zulaufen und erhitzt bei gleicher Temperatur und unter Rühren nochmals 3 bis 8 Stunden. Danach wird auf 70 bis 100° C abgekühlt und unter Vakuum die Hauptmenge des überschüssigen Phosphorsäureesters und ein Teil des Nitrobenzols abdestilliert. Nach dem Abkühlen wird abgenutscht, das Nutschgut mit Äthanol gewaschen oder mittels Wasserdampfdestillation vom restlichen Lösungsmittel befreit. Der Rückstand wird mit Wasser neutral gewaschen und gegebenenfalls getrocknet.

Der so in Stufe I erhaltene 1-Acylamino-4-anilidoanthrachinon-2-carbonsäuremethylester wird nun zusammen mit einigen Teilen Puffer, 1 bis 10 Gewichtsprozent Palladium (5%) auf Kohle oder Raney-Nickel, bezogen auf den Ester, 2 bis 4 Mol einer ca. 0,5 n wäßrigen Alkalihydroxid-Lösung pro Mol anthrachinonverbindung und 5 bis 10% Pyridin, bezogen auf die Menge der Alkalihydroxidlösung, vorgelegt, und unter gutem Rühren bei Zimmertemperatur mit Wasserstoff unter gelindem Druck begast. Nachdem die zur Ringschlußreaktion notwendige Wassersoffmenge aufgenommen worden ist, wird die Reaktionsmischung klarfiltriert und der Rückstand mit einer sogenannten blinden Küpe, bestehend aus ca. 10%iger Alkalihydroxidlösung und 1 bis 5% Alkalidithionit, bezogen auf die Alkalihydroxidlösung, portionsweise gewaschen. Die blinde Küpe bewirkt eine Lösung des im Filtrationsrückstand noch vorhandenen Produktes.

Das nun im Filtrat vorhandene gelöste Leuko-1-acylamino-3,4-phthaloylacridon wird mit Luft oxidiert und das ausgefallene Produkt, 1-Acylamino-3,4-phthaloylacridon, warm filtriert, mit Wasser neutral gewaschen und getrocknet. Falls erwünscht, kann die Acylaminogruppe zur freien Aminogruppe verseift werden, z. B. mit 90%iger $H_2SO_4$ bei 100° C.

Man erhält auf diese Weise ein Produkt von guter Reinheit und in ca. 90%iger Ausbeute, bezogen

auf die Theorie. Führt man die Ringschlußreaktion unter Wasserstoffdruck von bis zu 30 bar durch, kann diese erheblich schneller ablaufen.

Die Reaktionsdauer ist auch von der physikalischen Form des Ausgangsproduktes abhängig; fein gemahlenes oder aus einem Lösungsmittel (z. B. Dimethylformamid) umgefälltes Ausgangsprodukt reagiert bedeutend schneller als ein grobkristallines Produkt.

Das neue Verfahren liefert gegenüber den am Anfang zitierten Verfahren insbesondere höhere Produktausbeuten und ist wegen des niedrigen Alkalibedarfs sehr umweltfreundlich, da der Alkaliüberschuß nach der Reaktion neutralisiert und dem Abwasser zugeführt werden muß. Bei der sonst üblichen Verwendung von Hydrosulfit bzw. Zinkstaub entsteht zudem eine hohe Salz- bzw. Schwermetallbelastung der Abwässer.

Das neue Verfahren wird anhand der nachfolgenden Beispiele illustriert. Teile bedeuten Gewichtsteile.

## Beispiel 1

### Herstellung des 1-Benzoylamino-4-anilidoanthrachinon-2'-carbonsäure-methylesters — Stufe I

81,2 Teile (0,2 Mol) 1-Benzoylamino-4-bromanthrachinon, 34,25 Teile Anthranilsäure, 41,4 Teile Kaliumcarbonat, 0,3 Teile Kupfer-(I)-chlorid und 240 Teile Nitrobenzol werden unter Rühren in einer Stickstoffatmosphäre auf 115 bis 120° C erhitzt. Es entsteht nach 2 Stunden eine dicke violette Suspension. 0,2 Teile Kupfer-(I)-chlorid wird noch dem Reaktionsgemisch zugegeben und es wird 2 Stunden bei 115 bis 120° C weitergeführt. Das gebildete Wasser wird fortwährend abdestilliert. Die Temperatur wird dann auf 135 bis 140° C erhöht und bei dieser Temperatur 5 Stunden gehalten. Man läßt danach 240 Teile Dimethylmethanphosphonat zulaufen, 5 Stunden bei 135 bis 140° C weiterrühren und auf 70 bis 80° C abkühlen. Bei dieser Temperatur werden ca. 200 Teile einer Mischung von Nitrobenzol und Dimethylmethanphosphonat unter Vakuum abdestilliert. Nach dem Abkühlen auf 20° C nutscht man ab und wäscht mit 100 Teilen Äthylalkohol. Bis zur Entfernung des restlichen Nitrobenzols wird das Nutschgut wasserdampfdestilliert, abgesaugt, mit Wasser neutral gewaschen und getrocknet. Die Ausbeute an 1-Benzoylamino-4-anilidoanthrachinon-2'-carbonsäuremethylester beträgt 91,3% der Theorie.

Anstatt Nitrobenzol kann auch Amylalkohol als Lösungsmittel verwendet werden, wobei aber ca. 800 bis 900 Teile Amylalkohol notwendig sind, damit das Reaktionsgemisch gut rührbar bleibt.

### Herstellung des 1-Benzoylamino-3,4-phthaloylacridons-Ringschlußreaktion — Stufe II

23,8 Teile (0,05 Mol) 1-Benzoylamino-4-anilidoanthrachinon-2'-carbonsäuremethylester, 6 Teile Natriumacetat, 1 Teil Palladium-Kohle à 5%, 250 Teile einer wäßrigen Natriumhydroxidlösung 0,5 n und 12,5 Teile Pyridin werden unter Wasserstoff bei Zimmertemperatur kräftig gerührt. Der Wasserstoff wird nach und nach aufgenommen und es entsteht eine violett-rote Lösung. Nachdem ca. 1230 ml Wasserstoff aufgenommen worden sind, wird die Reaktionsmischung klarfiltriert und der Rückstand mit ca. 200 Teilen einer ca. 50 bis 60° C warmen blinden Küpe, bestehend aus ca. 180 Teilen Wasser, 15 Teilen Natriumhydroxid und 5 Teilen Natriumdithionit, portionenweise gewaschen. Das im Filtrat gelöste Leuko-1-benzoylamino-3,4-phthaloylacridon wird mit Luft oxidiert und das ausgefallene 1-Benzoylamino-3,4-phthaloylacridon warm filtriert, mit heißem Wasser neutral gewaschen und getrocknet. Die Ausbeute an reinem Produkt beträgt ca. 90% der Theorie. Wenn nötig, kann die Benzoylaminogruppe z. B. mit 90%iger Schwefelsäure bei 100° C zur freien Aminogruppe verseift werden.

## Beispiel 2

### Herstellung von 1-Acetylamino-3,4-phthaloylacridon

20,7 Teile 1-Acetylamino-4-anilido-2'-carbonsäuremethylester (aus 1-Acetylamino-4-bromanthrachinon nach Beispiel 1, Stufe I hergestellt), 8 Teile Natriumacetat, 2 Teile Raney-Nickel, 17,5 Teile Pyridin und 350 Teile Natriumhydroxidlösung 0,5 n werden unter Wasserstoff bei Zimmertemperatur kräftig gerührt. Nachdem 1232 ml Wasserstoff aufgenommen worden sind, wird die entstandene weinrote Lösung klarfiltriert und der Rückstand mit ca. 200 Teilen einer blinden Küpe (180 Teile Wasser, 15 Teile Natriumhydroxid, 5 Teile Natriumdithionit) portionsweise gewaschen. Das gelöste Leuko-1-acetylamino-3,4-phthaloylacridon wird mit Luft oxidiert, das 1-Acetylamino-3,4-phthaloylacridon filtriert und getrocknet. Die Ausbeute an reinem Produkt beträgt 91,3% der Theorie.

Diese Reaktion kann auch in einem rein wäßrigen Milieu, d. h. ohne Pyridin durchgeführt werden. Die Reaktion dauert dann aber etwa 2mal so lang.

Beispiel 3

Herstellung von 1-Benzoylamino-3,4-phthaloylacridon

23,8 Teile 1-Benzoylamino-4-anilidoanthrachinon-2′-carbonsäuremethylester, 1 Teil Palladium-Kohle a 5%, 250 Teile Natriumhydroxidlösung 0,5 n, 30 Teile Äthylalkohol werden bei Zimmertemperatur unter kräftigem Rühren hydriert. Nachdem ca. 1230 ml Wasserstoff aufgenommen worden sind, wird die Reaktionsmischung klarfiltriert und der Rückstand mit ca. 200 Teilen einer blinden Küpe (180 Teile Wasser, 15 Teile Natriumhydroxid, 5 Teile Natriumdithionit) portionenweise gewaschen. Das im Filtrat gelöste Leuko-1-benzoylamino-3,4-phthaloylacridon wird mit Luft oxidiert. Das ausgefallene 1-Benzoylamino-3,4-phthaloylacridon wird warm filtriert, mit heißem Wasser neutral gewaschen und getrocknet. Die Ausbeute an reinem Produkt beträgt 90,9% der Theorie.

Beispiel 4

Arbeitet man wie im Beispiel 1 beschrieben, verwendet jedoch anstelle von 1-Benzoylamino-4-anilidoanthrachinon-2′-carbonsäuremethylester eine äquivalente Menge 1-Benzoylamino-4-anilidoanthrachinon-2-carbonsäureäthylester, so erhält man 1-Benzoylamino-3,4-phthaloylacridon in ähnlicher Ausbeute wie im Beispiel 1. Der Äthylester kann nach Beispiel 1 hergestellt werden, indem man anstatt Dimethylmethanphosphonat Diäthyläthanphosphonat verwendet. Die Veresterung verläuft zwar etwas langsamer. Eine Veresterungstemperatur von ca. 150 bis 155° C ist in diesem Fall vorzuziehen.

Beispiel 5

Arbeitet man wie im Beispiel 1 beschrieben, verwendet jedoch anstelle von 1-Benzoylamino-4-bromanthrachinon äquivalente Mengen 1-Benzoylamino-4-brom-6-chloranthrachinon oder 1-Benzoylamino-4-brom-7-chloranthrachinon so erhält man 1-Benzoylamino-6-chlor- bzw. -7-chlor-3,4-phthaloylacridon in ähnlicher Ausbeute.

Beispiel 6

Arbeitet man wie im Beispiel 1 beschrieben, verwendet jedoch anstelle von 1-Benzoylamino-4-bromanthrachinon äquivalente Mengen 1-Propionylamino-4-bromanthrachinon oder 1-Butyrylamino-4-bromanthrachinon so erhält man 1-Propionylamino-3,4-phthaloylacridon bzw. 1-Butyrylamino-3,4-phthaloylacridon in ähnlicher Ausbeute.

**Patentansprüche**

1. Verfahren zur Herstellung von 1-Acylamino-3,4-phthaloylacridonen durch Umsetzung von 1-Acylamino-4-bromanthrachinon mit Anthranilsäure zu 1-Acylamino-4-anilidoanthrachinon-2′-carbonsäure, Veresterung der Säure und anschließende reduktive Ringschlußreaktion, dadurch gekennzeichnet, daß man die Veresterung mittels Alkylphosphorsäuredialkylestern durchführt, wobei die Alkylgruppen je 1 bis 4 C-Atome aufweisen, und die reduktive Ringschlußreaktion vom 1-Acylamino-4-anilido-2′-carbonsäureester der Formel

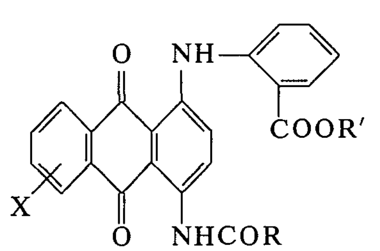

zum 1-Acylamino-3,4-phthaloylacridon der Formel

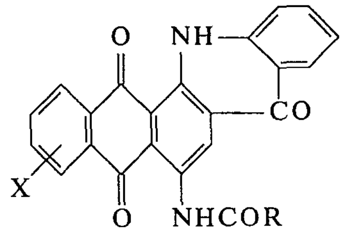

wobei R Phenyl, Alkylphenyl, $C_1-C_8$-Alkyl, R′ $C_1-C_4$-Alkyl und X Wasserstoff, Halogen oder $C_1-C_4$-Alkyl bedeuten, mittels eines Hydrierungskatalysators und Wasserstoff im basischen Reaktionsmedium vollzieht.

2. Verfahren nach Anspruch 1, dadurch gekennzeichnet, daß man die Reaktion vom 1-Acylamino-4-bromanthrachinon zum 1-Acylamino-4-anilidoanthrachinon-2′-carbonsäuremethylester in einem polaren Lösungsmittel unter Verwendung von Dimethylmethanphosphonat als Veresterungsmittel in einem 1- bis 5fachen molaren Überschuß der zur Veresterung der Carbonsäure notwendigen Menge bei einer Temperatur zwischen 100 und 150° C als Eintopfreaktion durchführt.

3. Verfahren nach Anspruch 2, dadurch gekennzeichnet, daß man Amylalkohol oder Nitrobenzol als polares Lösungsmittel verwendet.

4. Verfahren nach Anspruch 1, dadurch gekennzeichnet, daß man als Hydrierungskatalysator Raney-Nickel oder Palladium auf Kohle verwendet.

5. Verfahren nach Anspruch 1, dadurch gekennzeichnet, daß man die reduktive Ringschlußreaktion vom 1-Acylamino-4-anilido-anthrachinon-2′-carbonsäureester zum 1-Acylamino-3,4-phthaloylacridon unter Zusatz von 2 bis 4 Mol, insbesondere 2,2 bis 3 Mol Alkali pro Mol Anthrachinonverbindung durchführt.

6. Verfahren nach Anspruch 5, dadurch gekennzeichnet, daß man als Alkali KOH oder vor allem NaOH verwendet.

7. Verfahren nach Anspruch 1, dadurch gekennzeichnet, daß man während der Ringschlußreaktion eine Puffersubstanz in der Menge von 1 bis 10 Gewichtsprozent, bezogen auf den Ester, zusetzt.

8. Verfahren nach Anspruch 1, dadurch gekennzeichnet, daß man während der Ringschlußreaktion 30 bis 100 Gewichtsprozent, bezogen auf den Ester, eines Lösungsvermittlers zusetzt.

9. Verfahren nach Anspruch 8, dadurch gekennzeichnet, daß man als Lösungsvermittler Pyridin oder Pyridinderivate verwendet.

10. Verfahren nach Anspruch 1, dadurch gekennzeichnet, daß man von 1-Benzoylamino-4-bromanthrachinon oder 1-Acetylamino-4-bromanthrachinon ausgeht.

11. Verfahren nach Anspruch 1, dadurch gekennzeichnet, daß man einen Wasserstoffdruck von 1 bis 30 bar anwendet.

**Claims**

1. A process for the preparation of a 1-acylamino-3,4-phthaloylacridone by reaction of 1-acylamino-4-bromoanthraquinone with anthranilic acid to give 1-acylamino-4-anilidoanthraquinone-2′-carboxylic acid, esterification of the acid and subsequent reductive cyclisation, which process comprises carrying out the esterification with an alkylphosphoric acid dialkyl ester, the alkyl groups of which each contain 1 to 4 carbon atoms, and carrying out the reductive cyclisation of 1-acylamino-4-anilido-2′-carboxylate of the formula

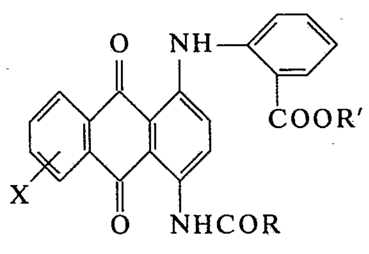

to give 1-acylamino-3,4-phthaloylacridone of the formula

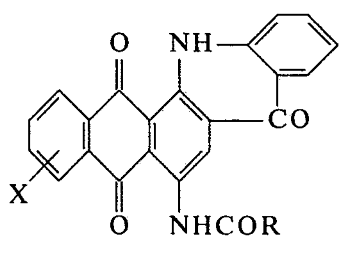

wherein R is phenyl, alkylphenyl or $C_1-C_8$alkyl, R′ is $C_1-C_4$alkyl and X is hydrogen, halogen or $C_1-C_4$alkyl, with a hydrogenation catalyst and hydrogen, in a basic reaction medium.

2. A process according to claim 1, wherein the reaction of 1-acylamino-4-bromoanthraquinone to give methyl 1-acylamino-4-anilidoanthraquinone-2′-carboxylate is carried out as a single-vessel reaction, in a polar solvent, using dimethyl methanephosphonate as esterifying agent in a 1- to 5-fold molar excess of the amount required for the esterification of the carboxylic acid, in the temperature range

from 100° to 150° C.

3. A process according to claim 2, wherein the polar solvent is amyl alcohol or nitrobenzene.

4. A process according to claim 1, wherein the hydrogenation catalyst is Raneyl nickel or palladium on carbon.

5. A process according to claim 1, wherein the reductive cyclisation of 1-acylamino-4-anilidoanthraquinone-2'-carboxylate to give 1-acylamino-3,4-phthaloylacridone is carried out with the addition of 2 to 4 moles, preferably 2.2 to 3 moles, of alkali per mole of anthraquinone.

6. A process according to claim 5, wherein the alkali is KOH or, preferably, NaOH.

7. A process according to claim 1, wherein a buffer substance is added in an amount of 1 to 10 per cent by weight, based on the ester, during the cyclisation.

8. A process according to claim 1, wherein 30 to 100 per cent by weight, based on the ester, of a solubiliser is added during the cyclisation.

9. A process according to claim 8, wherein the solubiliser is pyridine or a derivative thereof.

10. A process according to claim 1, wherein the starting material is 1-benzoylamino-4-bromoanthraquinone or 1-acetylamino-4-bromoanthraquinone.

11. A process according to claim 1, wherein a hydrogen pressure of 1 to 30 bars is applied.

**Revendications**

1. Procédé pour la préparation de 1-acylamino-3,4-phthaloylacridones par conversion de 1-acylamino-4-bromo-anthraquinone en acide 1-acylamino-4-anilido-anthraquinone-2'-carboxylique au moyen de l'acide anthranilique, estérification de l'acide suivie d'une réaction de cyclisation par réduction, caractérisé par le fait que l'on procède à l'estérification au moyen de dialkylesters de l'acide phosphorique alcoylé dont les groupes alkyle possèdent chacun de 1 à 4 atomes de carbone, et que la réaction de cyclisation par réduction de l'ester de l'acide 1-acylamino-4-anilido-2'-carboxylique de formule:

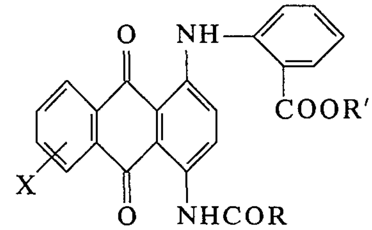

en 1-acylamino-3,4-phtaloylacridone de formule:

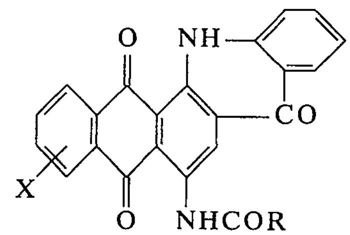

où R représente un groupe phényle, alkyl-phényle, ou alkyle en $C_1-C_8$; R' représente un groupe alkyle en $C_1-C_4$, et X représente un atome d'hydrogène, un halogène, ou un groupe alkyle en $C_1-C_4$, s'effectue en présence d'un catalyseur d'hydrogénation et d'hydrogène, en milieu réactionnel basique.

2. Procédé selon la revendication 1, caractérisé par le fait qu'on effectue la réaction de transformation de la 1-acylamino-4-bromo-anthraquinone en ester méthylique de l'acide 1-acylamino-4-anilido-anthraquinone-2'-carboxylique dans un solvant polaire en utilisant le diméthylméthanephosphonate comme agent d'estérification en une quantité molaire dépassant de 1 à 5 fois la quantité nécessaire à l'estérification de l'acide carboxylique, à une température de réaction comprise entre 100 et 150° C, sous forme d'une réaction en une opération.

3. Procédé selon la revendication 2, caractérisé par le fait qu'on utilise comme solvant polaire l'alcool amylique ou le nitrobenzène.

4. Procédé selon la revendication 1, caractérisé par le fait qu'on utilise comme catalyseur d'hydrogénation le nickel de Raney ou du charbon palladié.

5. Procédé selon la revendication 1, caractérisé par le fait qu'on effectue la réaction de cyclisation par réduction de l'ester 1-acylamino-4-anilido-anthraquinone-2'-carboxylique en 1-acylamino-3,4-phtaloylacridone en a ajoutant de 2 à 4 moles, particulièrement de 2,2 à 3 moles, d'alcali par mole de composé anthraquinonique.

6. Procédé selon la revendication 5, caractérisé par le fait qu'on utilise comme alcali KOH ou surtout NaOH.

7. Procédé selon la revendication 1, caractérisé par le fait qu'on ajoute, au cours de la réaction de cyclisation, une substance tampon en quantité comprise entre 1 et 10% en poids, basée sur le poids de l'ester.

8. Procédé selon la revendication 1, caractérisé par le fait qu'on ajoute, au cours de la réaction de cyclisation, un unisseur en quantité comprise entre 30 et 100% en poids, basée sur le poids de l'ester.

9. Procédé selon la revendication 8, caractérisé par le fait qu'on utilise comme unisseur la pyridine ou des dérivés de la pyridine.

10. Procédé selon la revendication 1, caractérisé par le fait qu'on part de la 1-benzoylamino-4-bromo-antraquinone ou de la 1-acétylamino-4-bromo-anthraquinone.

11. Procédé selon la revendication 1, caractérisé par le fait qu'on utilise une pression d'hydrogène comprise entre 1 et 30 bars.